Europäisches Patentamt

European Patent Office

Office européen des brevets

(19)

(11) Veröffentlichungsnummer: **0 081 663**
**B1**

# (12) EUROPÄISCHE PATENTSCHRIFT

(45) Veröffentlichungstag der Patentschrift:
14.05.86

(21) Anmeldenummer: 82109976.9

(22) Anmeldetag: 28.10.82

(51) Int. Cl.⁴: **G 01 F 1/66**

(54) **Messwertgeber zur Bestimmung der Durchflussmenge einer strömenden Flüssigkeit.**

(30) Priorität: 14.12.81 CH 7951/81

(43) Veröffentlichungstag der Anmeldung:
22.06.83 Patentblatt 83/25

(45) Bekanntmachung des Hinweises auf die Patenterteilung:
14.05.86 Patentblatt 86/20

(84) Benannte Vertragsstaaten:
AT DE FR GB IT NL SE

(56) Entgegenhaltungen:
Keine Entgegenhaltungen.

(73) Patentinhaber: LGZ LANDIS & GYR ZUG AG,
CH-6301 Zug (CH)

(72) Erfinder: Lechner, Hubert, Industriestrasse 6,
CH-6300 Zug (CH)
Erfinder: Steinle, Benedikt, Schönbühl 10, CH-6300 Zug (CH)
Erfinder: Meisser, Claudio, Mythenstrasse 19,
CH-6410 Goldau (CH)

(74) Vertreter: Müller, Hans-Jürgen, Dipl.-Ing. et al, Müller,
Schupfner & Gauger
Lucile-Grahn-Strasse 38 Postfach 80 13 69,
D-8000 München 80 (DE)

## Beschreibung

Die Erfindung bezieht sich auf einen Messwertgeber zur Bestimmung der Durchflussmenge einer in einem Messrohr eines Rohrsystems strömenden Flüssigkeit nach dem Oberbegriff des Patentanspruchs 1.

Zur Bestimmung der Durchflussmenge einer Flüssigkeit durch ein Rohrsystem ist es bekannt (DE-B-29 24 561), Ultraschallwellenzüge von zwei Seiten gleichzeitig stromabwärts und stromaufwärts durch die im Messrohr strömende Flüssigkeit zu senden und zu empfangen, um aus der Laufzeitdifferenz auf die mittlere Strömungsgeschwindigkeit und damit auf die Durchflussmenge schliessen zu können.

Das Messverfahren ist unabhängig vom Strömungsprofil der strömenden Flüssigkeit, wenn das Messrohr als Wellenleiter verwendet wird und von den Schallwandlern ausschliesslich die ebene Grundwelle im Messrohr angeregt wird.

Ein einzelner Wellentyp kann nur von einer Schallquelle angeregt werden, die eine dem Wellentyp entsprechende Potentialverteilung erzeugt. Eine solche Schallquelle stellt der Kolbenschwinger dar, welcher aber im Frequenzbereich des Ultraschalls schwer zu verwirklichen ist.

Normalerweise erzeugt eine Schallquelle eine Mischwelle, d.h. eine Kombination verschiedener räumlicher Wellentypen, von denen jede Welle eine eigene, strömungsabhängige Phasengeschwindigkeit aufweist. Die Oberwellen einer solchen Mischwelle können vor allem im Bereich laminarer Strömungen erhebliche Messfehler verursachen.

Es wurde bereits vorgeschlagen, die Strömungsprofile der strömenden Flüssigkeit so zu beeinflussen, dass der Messfehler vernachlässigbar wird. Zu diesem Zwecke sind die Enden des Messrohres mit Öffnungen oder Schlitzen oder aussenseitig mit Zapfen versehen. Die Beeinflussung der Strömungsprofile kann auch mit Hilfe eines durch eine Speiche oder durch eine Trennwand gebildeten Steges im Messrohr erfolgen.

Der vorliegenden Erfindung liegt die Aufgabe zugrunde, den Einfluss der Oberwellen auf die Messgenauigkeit zurückzudämmen oder auszuschalten, ohne die Druckverluste und die Störanfälligkeit grundsätzlich zu erhöhen.

Die gestellte Aufgabe ist durch die Merkmale des Anspruchs 1 gelöst.

Ein Ausführungsbeispiel des erfindungsgemässen Messwertgebers wird anhand der Zeichnung näher erläutert. Es zeigen:

Fig. 1 einen schematischen Aufbau eines Messwertgebers und

Fig. 2 ein Zeigerdiagramm des Empfangssignals und der Oberwellen- und Grundwellenbeiträge bei ruhendem und bei bewegtem Strömungsmittel.

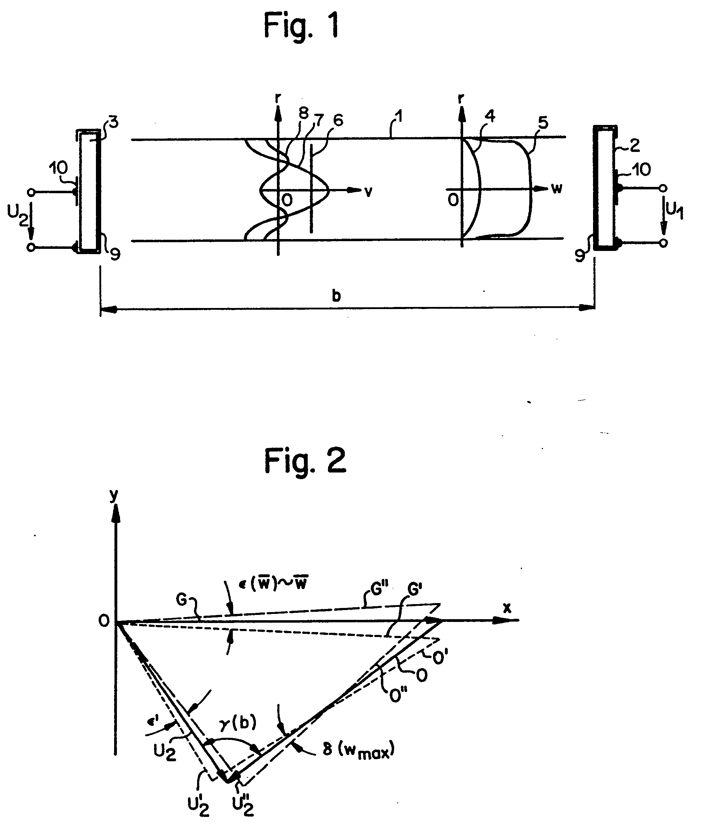

Ein Messrohr eines nicht gezeigten Rohrsystems eines Messwertgebers zur Messung der Durchflussmenge einer Flüssigkeit ist in der Fig. 1 mit 1 bezeichnet. An den Stirnseiten des Messrohres 1 sind in einem Abstand b zwei dem Messrohr vorgelagerte Ultraschallwandler 2, 3 angeordnet, die als Sender und Empfänger von Ultraschallsignalen $U_1$ und $U_2$ arbeiten. Die Strömungsflüssigkeit wird stirnseitig oder seitlich dem Messrohr 1 zu- und abgeführt. Der Messbereich umfasst laminare Strömung 4 und turbulente Strömung 5. Mit r ist die Durchmesserkoordinate des Messrohres 1, mit v die Teilchengeschwindigkeit der Flüssigkeit und mit w die Strömungsgeschwindigkeit bezeichnet. Die Ultraschallwandler 2 und 3 regen im Messrohr 1 neben der ebenen Grundwelle 6 auch Oberwellen an, von denen die erste Oberwelle 7 und die zweite Oberwelle 8 gezeigt sind.

Das Zeigerdiagramm in der Fig. 2 zeigt mit voll ausgezogenen Zeigern die Verhältnisse im Messwertgeber bei ruhender, d.h. nicht strömender Flüssigkeit. Das Empfangssignal $U_2$ setzt sich aus einem Grundwellenbeitrag G und aus einem Oberwellenbeitrag O zusammen, die zueinander in der Phase verschoben sind. Der Phasenwinkel $\gamma$ zwischen dem Zeiger des Empfangssignals $U_2$ und dem Zeiger des Oberwellenbeitrages O ist eine Funktion des Abstandes b der beiden Ultraschallwandler 2, 3.

Die Verhältnisse bei einer Schallausbreitung, die gegen die Stromdurchflussrichtung verläuft, mit dem Empfangssignal $U'_2$, dem Grundwellenbeitrag $G'$ und dem Oberwellenbeitrag $O'$ sind in der Fig. 2 punktiert gezeigt, während die Verhältnisse bei der in der Durchflussrichtung verlaufenden Schallausbreitung mit den Grössen $U''_2$, $G''$ und $O''$ gestrichelt eingezeichnet sind.

Bei strömender Flüssigkeit treten wegen der unterschiedlichen Signallaufzeiten stromabwärts und stromaufwärts bei den genannten Grössen Phasenunterschiede auf. Der Winkel $\varepsilon$ zwischen den Zeigern der Grundwellenbeiträge $G'$ und $G''$ ist proportional zu der mittleren Geschwindigkeit $\bar{w}$ der strömenden Flüssigkeit und somit vom Strömungsprofil unabhängig. Dagegen ist der Winkel $\delta$ zwischen den Zeigern der Oberwellenbeiträge $O'$ und $O''$ von der maximalen Strömungsgeschwindigkeit $w_{max}$ und somit vom Strömungsprofil abhängig.

Bei der Messung wird der Winkel $\varepsilon'$ der Empfangssignale $U'_2$ und $U''_2$ ermittelt. Dieser Winkel $\varepsilon'$ und somit auch das Messergebnis wird vom Strömungsprofil dann unabhängig, wenn der Abstand b so gewählt wird, dass der Phasenwinkel $\gamma$ bei ruhender Strömungsflüssigkeit annähernd 90° beträgt. Bei kleiner, laminarer Strömung ist dann $_d$ ($w_{max}$) ohne Einfluss auf $\varepsilon'$, bei grosser, turbulenter Strömung ist $w_{max}$ wenig verschieden von der mittleren Strömungsgeschwindigkeit $\bar{w}$; folglich ist auch der Winkel $\delta$ ($w_{max}$) wenig verschieden von $\varepsilon$ ($\bar{w}$), d.h. von dem Winkel der Grundwellenbeiträge $G'$, $G''$.

Diese Überlegungen gelten, solange der Grundwellenbeitrag G den Oberwellenbeitrag O übersteigt (G > O). Ist der Oberwellenbeitrag O grösser als der Grundwellenbeitrag (G < O), so wird der Abstand b derart gewählt, dass der Pha-

senwinkel γ annähernd 0° beträgt. In diesem Falle, d.h. bei O > G, ist die Messung zwar mit einem im Vergleich zum erstgenannten Fall grösseren Fehler behaftet, dieser Fehler ist aber bei γ = 0° minimal.

Der Oberwellenbeitrag O lässt sich klein halten, wenn die Ultraschallwandler 2, 3 mit mindestens je einer Teilelektrode 10 versehen sind, so dass sie ein Einzelresonanzverhalten mit annähernd glockenförmiger Schwingungsform aufweisen, und/oder, wenn das Messrohr 1 dünnwandig und/oder schallabsorbierend verkleidet und/oder ausgekleidet ist.

Durch die beschriebene Wahl des Abstandes b zwischen den beiden Ultraschallwandlern 2, 3 lässt sich der Einfluss der Oberwellen beim Betrieb des Messwertgebers zurückdämmen oder sogar ausschalten und somit der Messfehler herabsetzen, wobei weder Druckverluste im System auftreten noch die Störungsanfälligkeit erhöht wird.

## Patentansprüche

1. Messwertgeber für eine Einrichtung zur Bestimmung der Menge der durch ein Rohrsystem fliessenden Flüssigkeit anhand der Laufzeitdifferenz von Ultraschallimpulsen in und gegen die Strömungsrichtung, mit zwei an entgegengesetzten Enden eines Messrohrabschnitts (1) des Rohrsystems angeordneten, jeweils als Sender und als Empfänger betreibbaren Ultraschallwandlern (2, 3), welche im Sendebetrieb im Messrohrabschnitt Schwingungstypen anregen, die jeweils eine räumliche Grundwelle (6) mit einem über den Querschnitt des Messrohrabschnitts im wesentlichen ebenen Profil sowie räumliche Oberwellen (7, 8) zu diesen Grundwellen enthalten, und welche im Empfangsbetrieb ein dem jeweils empfangenen Schwingungstyp entsprechendes Ausgangssignal ($U_2$) erzeugen, dadurch gekennzeichnet, dass die beiden Ultraschallwandler (2, 3) im Falle der Anregung von Schwingungstypen mit einem im Vergleich zum Grundwellenbeitrag kleineren bzw. grösseren Oberwellenbeitrag in einem solchen Abstand voneinander angeordnet sind, dass der Phasenwinkel (γ) zwischen den Ultraschallschwingungen des empfangenden Schwingungstyps und des Oberwellenbeitrags zu diesem Schwingungstyp bei ruhender Flüssigkeit annähernd 90° bzw. 0° beträgt.

2. Messwertgeber nach Anspruch 1, dadurch gekennzeichnet, dass die Ultraschallwandler (2, 3) derart mit Teilelektroden (10) versehen sind, dass sie ein Einzelresonanzverhalten mit annähernd glockenförmiger Schwingungsform aufweisen.

3. Messwertgeber nach einem der Ansprüche 1 oder 2, dadurch gekennzeichnet, dass der Messrohrabschnitt (1) dünnwandig ist.

4. Messwertgeber nach einem der Ansprüche 1 bis 3, dadurch gekennzeichnet, dass der Messrohrabschnitt (1) schallabsorbierend verkleidet und/oder ausgekleidet ist.

## Claims

1. A measuring sensor for an arrangement for determining the amount of the fluid flowing through a pipe system, by means of the transit time difference of ultrasonic pulses in and opposite to the direction of flow, comprising two ultrasonic transducers (2, 3) which are arranged at oppositely disposed ends of a measuring pipe portion (1) of the pipe system and which can be respectively operated as a transmitter and as a receiver and which in the transmitting mode induce in the measuring pipe portion modes of oscillation which respectively include a spatial fundamental wave (6) with a substantially even profile over the cross-section of the measuring pipe portion, and spatial harmonics (7, 8) in relation to said fundamental waves, and which in the receiving mode generate and output signal ($U_2$) corresponding to the respectively received mode of oscillation, characterised in that, in the case involving the production of modes of oscillation with a harmonics component which is respectively smaller or larger in comparison with the fundamental wave component, the two ultrasonic transducers (2, 3) are arranged at such a spacing from each other that the phase angle (γ) between the ultrasonic oscillations of the receiving mode of oscillation and the harmonics component relative to that mode of oscillation, with the fluid still, is approximately 90° or 0° respectively.

2. A measuring sensor according to claim 1 characterised in that the ultrasonic transducers (2, 3) are provided with partial electrodes (10) in such a way that they have a single resonance characteristic with approximately bell-like form of oscillation.

3. A measuring sensor according to one of claims 1 or 2 characterised in that the measuring pipe portion (1) is thin-walled.

4. A measuring sensor according to one of claims 1 to 3 characterised in that the measuring pipe portion (1) is sound-absorbingly clad and/or lined.

## Revendications

1. Capteur de mesure pour un dispositif servant à déterminer la quantité de liquide circulant dans un système à tube, sur la base de la différence des temps de transit d'impulsions ultrasoniques dans la direction d'écoulement et dans la direction opposée, comportant deux transducteurs ultrasoniques (2, 3), qui sont disposés sur des extrémités opposées d'un élément (1) d'un tube de mesure du système à tube et peuvent fonctionner respectivement en tant qu'émetteur et récepteur et qui, lors du fonctionnement à l'émission, excitent dans l'élément du tube de mesure, des types d'oscillations qui contiennent respectivement une onde de base spatiale (6) possédant un profil essentiellement plat sur la section transversale de l'élément du tube de mesure, ainsi que des ondes spatiales (7, 8) qui sont des ondes harmoniques de ces ondes de base, et qui, pendant le fonctionnement à la réception, produisent un signal de sortie ($U_2$) correspondant au type d'oscillations respectivement reçu, caractérisé en ce que, dans le cas de l'excitation de types d'oscillations avec une composante d'onde harmonique inférieure ou supérieure à la composante d'onde de base, les deux transducteurs ultrasoniques (2, 3) sont disposés à une distance réciproque telle que l'angle de phase ($\gamma$) entre les deux oscillations ultrasoniques du type d'oscillations reçu et de la composante d'onde harmonique pour ce type d'oscillations est égal approximativement à 90° ou à 0° dans le cas d'un liquide au repos.

2. Capteur de mesure selon la revendication 1, caractérisé en ce que les transducteurs ultrasoniques (2, 3) sont munis d'électrodes partielles (10) de telle sorte qu'ils possèdent un comportement de résonance individuelle présentant une forme d'oscillation approximativement en cloche.

3. Capteur de mesure selon l'une des revendications 1 ou 2, caractérisé en ce que l'élément (1) du tube de mesure possède une paroi mince.

4. Capteur de mesure selon l'une des revendications 1 à 3, caractérisé en ce que l'élément (1) du tube de mesure possède un revêtement et/ou un habillage insonorisant.

# Fig. 1

# Fig. 2